# EUROPÄISCHE PATENTSCHRIFT

(11) **EP 4 013 644 B1**
(45) Veröffentlichungstag und Bekanntmachung des Hinweises auf die Patenterteilung: **09.04.2025**
(21) Anmeldenummer: 20753746.5
(22) Anmeldetag: 07.08.2020
(51) Int. Cl.: B60N 2/56

(54) **MODULARE BELÜFTUNGSEINHEIT FÜR EINEN SITZ**
MODULAR VENTILATION UNIT FOR A SEAT
UNITÉ DE VENTILATION MODULAIRE POUR UN SIÈGE

(30) Priorität: 12.08.2019 DE 102019121645
(43) Veröffentlichungstag der Anmeldung: 22.06.2022
(73) Patentinhaber: VOLKSWAGEN AG, 38440 Wolfsburg (DE); Brose Sitech GmbH, 38442 Wolfsburg (DE)
(72) Erfinder: VOLZ, Marc, 38471 Rühen (DE); NOETZEL, Albrecht, 38539 Müden/Aller (DE); BÖTTGER, Ralph, 39179 Ebendorf (DE)
(74) Vertreter: Gulde & Partner
(86) Internationale Anmeldenummer: PCT/EP2020/072256
(87) Internationale Veröffentlichungsnummer: WO 2021/028341

(56) Entgegenhaltungen:
- DE-A1- 102009 030 491
- DE-A1- 102012 006 074
- JP-A- H11 155 691
- KR-A- 20110 009 371

## Beschreibung

Die Erfindung betrifft einen Sitz umfassend mindestens eine Komponente, der mittels eines Lüfters einer Belüftungseinheit an einer dem Fahrzeuginsassen zugewandten Fläche der mindestens einen Komponente Luft in einem Saugbetrieb oder in einem Druckbetrieb ab- oder zugeführt wird.

Die Druckschrift DE 10 2007 039 422 B4 beschreibt einen Lüfter für eine Sitzbelüftungseinrichtung eines Polsters eines Fahrzeugsitzes, mittels welchem ein Luftstrom innerhalb eines Luft führenden Teils, insbesondere innerhalb einer Luft führenden Schicht, des Polsters zu erzeugen ist, wobei der Lüfter sowohl im Saugbetrieb wie auch im Druckbetrieb betrieben werden kann. Damit entsprechend zwischen Saugbetrieb und Druckbetrieb umgeschaltet werden kann, werden verschiedene Varianten vorgeschlagen, bei welcher die als Axiallüfter gestalteten Lüfter eine umkehrbare Drehrichtung aufweisen. Die heutigen Motoren der Lüfter funktionieren bürstenlos und werden über eine Elektronik kommutiert. Vorgesehen ist in einer Variante beispielsweise, dass entweder die jeweiligen Lüfter beziehungsweise deren Motoren mit einem zweiten Kommutatorensatz oder mit Bürsten ausgestattet sind, sodass die Drehrichtung entsprechend umgeschaltet werden kann. In anderen Varianten werden Lüfter eingesetzt, welche jeweils nur in einer Drehrichtung betreibbar sind. Um dennoch zu erreichen, dass sich sowohl ein Saugbetrieb wie auch ein Druckbetrieb der Sitzbelüftungseinrichtung beziehungsweise des jeweiligen Lüfters realisieren lässt, werden diese beispielsweise in einer Variante drehbar gelagert oder in einer anderen Variante anderweitig mechanisch umgekehrt. Der Lüfter wird somit in einer Variante in einer Lagerung drehbar gelagert, sodass er um 180° gedreht werden kann, um somit vom Saugbetrieb auf den Druckbetrieb - und umgekehrt - umstellen zu können. Die Umstellung kann beispielsweise mittels eines schematisch angedeuteten jeweiligen Aktuators erfolgen. Anstelle der Drehlagerung kann in einer anderen Variante auch eine andere mechanische Umkehrung vorgesehen werden, mit welcher ein lediglich in einer Drehrichtung betreibbarer Lüfter entsprechend so umgekehrt werden kann, dass dieser im einen Fall Luft in die Ventilationsschicht drückt beziehungsweise bläst und im anderen Fall Luft aus der Ventilationsschicht heraussaugt.

Die Druckschrift DE 10 2012 006 074 A1 offenbart einen Kraftfahrzeugsitz mit einer einem Fahrzeuginsassen zugewandten Fläche, die als Sitz oder Lehnenfläche ausgebildet ist, wobei zumindest einer der jeweiligen Flächen ein Axiallüfter zugeordnet ist, der insbesondere zwischen einem Blasbetrieb und einem Saugbetrieb umschaltbar ist und der eine Luftansaugung oder einen Luftausstoß ausschließlich über die dem Fahrzeuginsassen zugewandten Fläche bewirkt.

Die Druckschrift DE 11 2008 003 132 B4 offenbart ein Sitzklimatisierungsmodul für eine Sitzklimatisierungsanordnung, umfassend: - eine Luftbewegungseinrichtung zum Fortbewegen eines Fluids, die mit mindestens einem Einlassanschluss und mindestens einem Auslassanschluss in Fluidverbindung steht, wobei mindestens der Einlassanschluss oder der Auslassanschluss oder beide mit einem klimatisierten Bereich über einen Verteilungskanal in Fluidaustausch stehen und eine Ventilanordnung mit mindestens zwei Öffnungen, die beweglich zwischen der Luftbewegungseinrichtung und den Anschlüssen des mindestens einen Einlasses und des mindestens einen Auslasses angeordnet ist, um die Bewegung des Fluids zwischen den Anschlüssen des mindestens einen Einlasses und des mindestens einen Auslasses und dem klimatisierten Bereich zu steuern, wobei mindestens eine Betätigungsvorrichtung zum Bewegen der Ventilanordnung zum Steuern des Durchgangs des Fluids durch die mindestens zwei Öffnungen und eine Steuerungsvorrichtung zum mindestens Steuern der Position der mindestens zwei Öffnungen der Ventilanordnung angeordnet ist

Die erläuterten Lösungen eine Belüftungseinheit für eine Komponente eines Sitzes, insbesondere eines Fahrzeugsitzes mit einem (wahlweise) Saugbetrieb und einem Druckbetrieb, der auch als Blasbetrieb bezeichnet wird, zu schaffen, werden als vorteilhaft angesehen, jedoch erscheinen die Lösungen zur Umschaltung sehr aufwändig und teilweise nur unter Zurverfügungstellung eines großen Platzangebotes realisierbar.

Zudem wird auf die Druckschriften KR 2011 000 9371 A, JP H11 155691 A und DE 10 2009 030 491 A1 verwiesen, wobei die Druckschrift KR 2011 000 9371 A eine Umschaltung von einem Saugbetrieb in einen Druckbetrieb ermöglicht.

Der Erfindung liegt die Aufgabe zugrunde, eine Belüftungseinheit für einen Sitz, insbesondere einen Kraftfahrzeugsitz zu schaffen, welche einen Wechsel zwischen Saugbetrieb und Druckbetrieb in einfacher Weise gewährleistet.

Ausgangspunkt der Erfindung ist ein Sitz, umfassend mindestens eine Komponente, der mittels eines Radiallüfters einer Belüftungseinheit an einer dem Fahrzeuginsassen zugewandten Fläche der mindestens einen Komponente Luft in einem Saugbetrieb oder in einem Druckbetrieb ab- oder zugeführt wird.

Es ist vorgesehen, dass die Belüftungseinheit neben dem Radiallüfter ansaugseitig des Radiallüfters einen Saugkanal und druckseitig des Radiallüfters einen Druckkanal umfasst, wobei jedem Kanal eine Umschaltarmatur zugeordnet ist, die derart geschaltet sind, dass unter Beibehaltung der Drehrichtung des Radiallüfters im Saugbetrieb im Saugkanal eine saugende und im Druckbetrieb eine drückende strömungstechnische Verbindung zu der mindestens einen Komponente gewährleistet ist, wobei stets eine der Umschaltarmaturen umgebungsseitig eine Offenstellung einnimmt, in der sie gleichzeitig den ihr zugeordneten Kanal in Richtung der mindestens einen Komponente schließt. In vorteilhafter Weise kann durch Umschaltung der Umschaltarmaturen eine Belüftungseinheit nach den subjektiven Präferenzen des Nutzers in dem Saugbetrieb oder in dem Druckbetrieb betrieben werden. Die Wirkrichtung der Sitzklimatisierung ist somit nicht mehr festgelegt, sondern kann in vorteilhafter Weise ausgewählt werden. In herkömmlichen Sitzen, insbesondere Kraftfahrzeugsitzen, liegt bereits eine der Betriebsarten unveränderbar festgelegt vor oder die technischen Lösungen zur Umschaltung vom Saugbetrieb in den Druckbetrieb oder umgekehrt sind komplizierter aufgebaut und somit aufwändiger.

Es ist vorgesehen, dass die Umschaltarmaturen 3/2-Wege-Umschalt-Armaturen sind. Eine Umschaltung vom Saugbetrieb in den Druckbetrieb und umgekehrt erfolgt in vorteilhafter Weise durch einfaches wechselseitiges Öffnen und Schließen der 3/2-Wege-Umschalt-Armaturen.

Erfindungsgemäß ist vorgesehen, dass die Umschaltarmaturen und der Radiallüfter ein kompaktes Modul bilden, indem die Umschaltarmaturen und der Radiallüfter in die Kanäle integriert angeordnet sind, wobei für beide Umschaltarmaturen ein einziger Aktor vorgesehen ist, wobei für beide 3/2-Wege-Umschaltarmaturen als Aktor ein einziger Stellantrieb vorgesehen ist, der das wechselseitige Öffne und Schließen der 3/2-Wege-Umschalt-Armaturen bewirkt, wobei der einzige Stellantrieb eine einzige antriebsseitige Achse antreibt, auf der die als Lüftungsklappen ausgebildeten 3/2-Wege-Umschalt-Armaturen zueinander versetzt fest angeordnet sind, sodass eine Drehbewegung der einzigen antriebsseitigen Achse in die eine oder andere Drehrichtung mittels des einzigen Stellantriebs beide Lüftungsklappen in die gewünschte Stellung bewegt, wobei eine Umschaltung vom Saugbetrieb in den Druckbetrieb und umgekehrt durch das wechselseitige Öffnen und Schließen der Lüftungsklappen erfolgt.

Schaltstellungen im Saugbetrieb:
Vorgesehen ist im Detail bevorzugt, dass im Saugkanal eine erste 3/2-Wege-Umschalt-Armatur angeordnet ist, wobei die erste 3/2-Wege-Umschalt-Armatur im Saugbetrieb eine erste Schaltstellung einnimmt, bei der ein erster Weg des Saugkanals umgebungsseitig geschlossen ist. Dabei ist bei dieser ersten Schaltstellung ein zweiter Weg saugseitig des Radiallüfters und ein dritter Weg komponentenseitig offen.

Im Druckkanal ist eine zweite 3/2-Wege-Umschalt-Armatur angeordnet, die im Saugbetrieb gleichzeitig mit der ersten 3/2-Wege-Umschalt-Armatur eine erste Schaltstellung einnimmt, bei der ein erster Weg des Druckkanals umgebungsseitig offen ist.

Dabei sind bei dieser ersten Schaltstellung ein zweiter Weg saugseitig des Radiallüfters offen und ein dritter Weg komponentenseitig geschlossen.

Schaltstellungen im Druckbetrieb:
Vorgesehen ist im Detail bevorzugt, dass die im Druckanal angeordnete zweite 3/2-Wege-Umschalt-Armatur eine erste Schaltstellung einnimmt, bei der ein erster Weg des Druckkanals umgebungsseitig geschlossen ist. Dabei ist bei dieser ersten Schaltstellung ein zweiter Weg druckseitig des Radiallüfters und ein dritter Weg komponentenseitig offen.

Im Saugkanal ist die erste 3/2-Wege-Umschalt-Armatur angeordnet, die im Druckbetrieb gleichzeitig zu der zweiten 3/2-Wege-Umschalt-Armatur eine erste Schaltstellung einnimmt, bei der ein erster Weg des Saugkanals umgebungsseitig offen ist. Dabei ist bei dieser Schaltstellung ein zweiter Weg saugseitig des Radiallüfters offen und ein dritter Weg komponentenseitig geschlossen.

Hinsichtlich des strukturellen Aufbaus ist vorgesehen, dass die Umschaltarmaturen und der Lüfter sowie die Kanäle außerhalb der Struktur der mindestens einen Komponente oder in der Struktur der mindestens einen Komponente oder im Schaum eines Polsters der mindestens einen Komponente angeordnet sind, wobei die Kanäle mit mindestens einem Luftführungskanal in Verbindung stehen, der an der zugewandten Fläche der mindestens einen Komponente endet.

Die Umschaltarmaturen und der Lüfter bilden ein kompaktes Modul, indem die Umschaltarmaturen und der Lüfter in die Kanäle integriert angeordnet sind. Die als Modul einheitlich aufgebaute Belüftungseinheit kann somit modular in verschiedenen Sitzen an den dafür vorgesehenen Orten verbaut werden und muss nur noch strömungstechnisch mit dem mindestens einen Luftführungskanal in den jeweiligen Komponenten verbunden werden. Ein zugehöriges Steuergerät steuert im Wesentlichen den Lüfter und die Umschaltarmaturen gemäß der Beschreibung. Es kann problemlos zwischen den Betriebsarten saugend und blasend (drückend) gewechselt werden, wobei der Lüfter und die Umschaltarmaturen beziehungsweise deren Antriebe entsprechend elektrisch angeschlossen sind.

Wie oben erläutert, erfolgt eine Umschaltung vom Saugbetrieb in den Druckbetrieb und umgekehrt, in vorteilhafter Weise durch einfaches wechselseitiges Öffnen und Schließen der 3/2-Wege-Umschalt-Armaturen. Mit anderen Worten, das Öffnen und Schließen der 3/2-Wege-Umschalt-Armaturen findet gleichzeitig statt. Diese Erkenntnis führt zu der erfindungsgemäßen Lösung, dass die 3/2-Wege-Umschalt-Armaturen, die als Klappen ausgebildet sind, mittels nur eines einzigen Aktors bewegt werden. Es wird somit in vorteilhafter Weise nur ein einziger Stellantrieb, in dem dadurch ebenfalls kompakt/er ausbildbaren Modul angeordnet, der beide 3/2-Wege-Umschalt-Armaturen gleichzeitig antreibt. Dieser Stellantrieb treibt eine Achse an, auf der die als Klappen ausgebildeten 3/2-Wege-Umschalt-Armaturen entsprechend zueinander versetzt fest angeordnet sind. Eine Drehbewegung der einzigen antriebsseitigen Achse in die eine oder andere Drehrichtung mittels des einzigen Stellantriebs bewegt somit in vorteilhafter Weise beide Klappen in die gewünschte Stellung AUF-/ZU, wenn der Wechselvorgang zwischen den Betriebsarten initiiert und durchgeführt wird, wie in der Figurenbeschreibung detailliert erläutert ist.

Bevorzugt ist in einer Ausführungsvariante vorgesehen, dass der Saugkanal und der Druckkanal mit dem mindestens einen Luftführungskanal in Verbindung stehen, über den der mindestens einen Komponente wechselseitig Luft abgesaugt oder zugeführt wird.

In einer anderen Ausführungsvariante ist vorgesehen, dass der Saugkanal und der Druckkanal jeweils mit mindestens einem Luftführungskanal in Verbindung stehen, über die der mindestens einen Komponente unabhängig voneinander Luft abgesaugt oder zugeführt wird.

Der Lüfter ist ein Radiallüfter, der gegenüber Axiallüftern bei großen Volumenströmen höhere Drücke aufbauen kann.

Vorgesehen ist ein Kraftfahrzeug mit einem solchen Sitz, mithin einem Kraftfahrzeugsitz der die erläuterte Belüftungseinheit aufweist, auszustatten.

Die Erfindung lehrt ein Verfahren zum Steuern einer Belüftungseinheit für ein Polster eines Sitzes nach Anspruch 1, mittels der einer dem Fahrzeuginsassen zugewandten Fläche der mindestens einen Komponente Luft in einem Saugbetrieb oder in einem Druckbetrieb ab- oder zugeführt wird, wobei erfindungsgemäß vorgesehen ist, dass der Lüfter ansaugseitig einem Saugkanal und druckseitig einem Druckkanal zugeordnet ist, wobei jedem Kanal eine 3/2-Wege-Umschalt-Armatur zugeordnet ist, die derart geschaltet werden, dass unter Beibehaltung der Drehrichtung des Radiallüfters im Saugbetrieb im Saugkanal eine saugende und im Druckbetrieb eine drückende strömungstechnische Verbindung zu der mindestens einen Komponente ausgebildet wird, wobei eine Umschaltung vom Saugbetrieb in den Druckbetrieb und umgekehrt durch wechselseitiges Öffnen und Schließen der 3/2-Wege-Umschalt-Armaturen vorgenommen wird. Dabei ist vorgesehen, dass für beide 3/2-Wege-Umschaltarmaturen ein einziger Stellantrieb vorgesehen ist, der das wechselseitige Öffnen und Schließen der 3/2-Wege-Umschalt-Armaturen bewirkt, wobei der einzige Stellantrieb eine einzige antriebsseitige Achse antreibt, auf der die als Lüftungsklappen ausgebildeten 3/2-Wege-Umschalt-Armaturen zueinander versetzt fest angeordnet sind, sodass beide Lüftungsklappen bei einer Drehbewegung der einzigen antriebsseitigen Achse in die eine oder andere Drehrichtung mittels des einzigen Stellantriebs in die gewünschte Stellung bewegt werden.

Die Erfindung wird nachfolgend anhand der zugehörigen Zeichnungen erläutert. Es zeigen:
- Figur 1: eine Belüftungseinheit im Saugbetrieb; und
- Figur 2: eine Belüftungseinheit im Druckbetrieb.

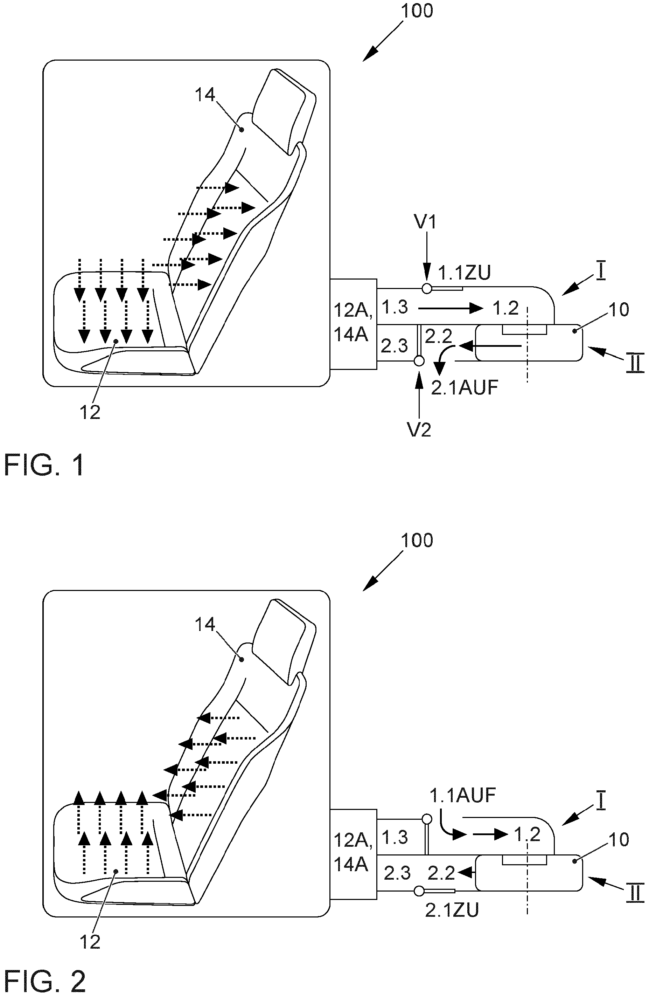

Die Figur 1 zeigt eine Belüftungseinheit am Beispiel eines Sitzes, insbesondere eines Fahrzeugsitzes im Saugbetrieb.

Die Darstellung betrifft das Sitzteil 12 und die Rückenlehne 14, die über nicht näher gezeigte Luftführungskanäle in den Polstern und entsprechende Zuführungsluftkanäle zu den Polstern verfügt, insofern ein Lüfter 10, insbesondere ein Radiallüfter nicht im Polster des Sitzteiles 12 und/oder der Rückenlehne 14 direkt angeordnet ist/sind.

Es versteht sich, dass je ein Radiallüfter 10 der jeweiligen Komponente 12, 14 zugeordnet werden kann oder dass nur ein Radiallüfter 10 angeordnet ist, um alle Komponenten 12, 14 gleichzeitig zu belüften, wobei dann selbstverständlich gleichzeitig alle Komponenten 12, 14 entweder im Saugbetrieb oder im Druckbetrieb belüftet werden, wie in den Figuren 1 und 2 dargestellt ist.

Es wird darauf verwiesen, dass weitere Komponenten, wie zum Beispiel die Kopfstütze oder die Seitenwange des Sitzteiles 12 und/oder der Rückenlehne 14 ebenfalls belüftet werden können, insofern in den Polstern entsprechende Luftführungskanäle und gegebenenfalls zwischen den Komponenten entsprechende Zuführungsluftkanäle angeordnet sind.

Die Erfindung wird nachfolgend anhand des Sitzteiles 12 und der Rückenlehne 14 erläutert, die gemäß Figur 1 gemeinsam mit einem Radiallüfter 10 im Saugbetrieb betrieben werden.

In der rechten Abbildung der Figur 1 ist ein Schaum 12A, 14A symbolisch dargestellt, in dem Luftführungskanäle im Polster des Sitzteiles 12 und/oder der Rückenlehne 14 angeordnet sind. Zwischen den Komponenten Sitzteil 12 und Rückenlehne 14 ist beispielsweise ein Zuführungsluftkanal ausgebildet, sodass die Luft auch in das Polster der Rückenlehne 14 gelangt, wenn die Belüftungseinheit, die in der rechten Abbildung dargestellt ist, beispielsweise dem Sitzteil 12 zugordnet ist.

Die Belüftungseinheit kann im gewählten Ausführungsbeispiel am Sitzteil 12 (extern), im Sitzteil 12 (in die Struktur des Sitzteiles 12 -strukturintegriert) oder im Polster des Sitzteiles 12 (in das Polster des Sitzteiles 12 -polsterintegriert) angeordnet werden.

Erfindungsgemäß umfasst die Belüftungseinheit, die bevorzugt gemäß den Figuren 1 und 2 (jedoch nicht zwingend) als kompaktes Modul ausgebildet ist, einen ersten Luftkanal I und einen zweiten Luftkanal II.

Jedem Kanal I und II ist jeweils eine Umschaltarmatur V1, V2 zugeordnet, die gemäß der Erfindung als 3/2-Wege-Armatur ausgebildet ist.

Die Kanäle I, II sind strukturell und strömungstechnisch über den Radiallüfter 10 miteinander verbunden, wobei die strukturelle Verbindung entweder direkt in kompakter Weise ohne Zwischenschaltung von weiteren luftführenden Elementen erfolgt.

Im Betrieb des Belüftungssystems bildet der erste Kanal I im Ausführungsbeispiel gemäß Figur 1 den Saugkanal und der zweite Kanal II gemäß Figur 2 den Druckkanal aus, wie nachfolgend noch erläutert wird. Der Saugkanal I ist saugseitig des Radiallüfters 10 angeschlossen, während der Druckanal II druckseitig des Radiallüfters 10 angeschlossen ist.

Der Radiallüfter 10 muss zur Umschaltung vom Saugbetrieb in den Druckbetrieb oder umgekehrt nicht bewegt werden, wie es in einigen Varianten im Stand der Technik in nachteiliger Weise notwendig ist. In vorteilhafter Weise sorgen die Umschaltarmaturen V1, V2 für eine entsprechende Umschaltung, ohne dass der Radiallüfter bewegt werden muss, wie nachfolgend noch erläutert wird.

Der Radiallüfter 10 ist im Ausführungsbeispiel im Druckkanal II angeordnet. Dadurch wird ein kleines kompaktes Package der Belüftungseinheit erreicht, die in verschiedenen Sitzen, insbesondere Fahrzeugsitzen ohne Änderungen der Belüftungseinheit verbaut werden kann. Dabei kann der Radiallüfter 10, der im Vergleich zum Axiallüfter eine geringere Bauhöhe aufweist und zudem einen höheren Druck erzeugt, prinzipiell auch in dem Saugkanal I angeordnet werden, insofern die Saugseite des Radiallüfters 10 entsprechend strömungstechnisch zugänglich gemacht wird und die Druckseite mit dem Druckkanal II weiterhin in strömungstechnischer Verbindung steht.

Im Saugkanal I ist gemäß Figur 1 die 3/2-Wege-Umschalt-Armatur V1 angeordnet, die eine Lüftungsklappe ist, wobei die 3/2-Wege-Umschalt-Armatur V1 eine erste Schaltstellung 1.1ZU einnimmt, bei der ein erster Weg 1.1 des Saugkanals I umgebungsseitig geschlossen ist.

Ein zweiter Weg 1.2 saugseitig des Radiallüfters 10 ist offen und ein dritter Weg 1.3 ist komponentenseitig, insbesondere sitzseitig beziehungsweise schaumseitig/polsterseitig des Sitzteiles 12, 12A beziehungsweise 14, 14A ebenfalls offen, sodass gemäß dem Pfeil 1.3 → 1.2 (Offenstellung im Saugbetrieb Kanal I) in Figur 1 im Betrieb des Radiallüfters 10 eine saugende Strömung im ersten Kanal I erzeugt wird, mittels der die Polster des Sitzteiles 12 und/oder der Rückenlehne in einem Saugbetrieb betrieben werden können.

Im Druckkanal II ist ebenfalls eine 3/2-Wege-Umschalt-Armatur V2 angeordnet, die eine Lüftungsklappe ist, wobei die 3/2-Wege-Umschalt-Armatur V2 gleichzeitig zu der ersten Schaltstellung 1.1ZU der 3/2-Wege-Umschalt-Armatur V1 eine zweite Schaltstellung 2.1AUF einnimmt, bei der ein erster Weg 2.1 des Druckkanals II umgebungsseitig geöffnet ist.

Ein zweiter Weg 2.2 druckseitig des Radiallüfters 10 ist offen und ein dritter Weg 2.3 ist komponentenseitig, insbesondere sitzseitig beziehungsweise schaumseitig/polsterseitig des Sitzteiles 12, 12A beziehungsweise 14, 14A geschlossen, da die 3/2-Wege-Umschalt-Armatur V2 umgebungsseitig in Offenstellung ist, wie gemäß dem Pfeil 2.2 → 2.1 verdeutlicht ist.

Somit ist ein Saugbetrieb gewährleistet, indem die 3/2-Wege-Umschalt-Armaturen V1, V2 bei der beschriebenen Anordnung in der Belüftungseinheit hinsichtlich der Kanalfreigabe beziehungsweise hinsichtlich der umgebungsseitigen Öffnung der Kanäle I, II gegenläufig Öffnen und Schließen, wie insbesondere durch eine Zusammenschau mit Figur 2 und der nachfolgenden Beschreibung verdeutlicht ist.

Im Saugkanal I ist gemäß Figur 2 die 3/2-Wege-Umschalt-Armatur V1 angeordnet, wobei die 3/2-Wege-Umschalt-Armatur V1 eine zweite Schaltstellung 1.1AUF einnimmt, sodass jetzt der erste Weg 1.1 des Saugkanals I umgebungsseitig geöffnet ist.

Der erste Weg 1.1 umgebungsseitig und der zweite Weg 1.2 saugseitig des Radiallüfters 10 sind jetzt offen, während der dritte Weg 1.3 sitzseitig beziehungsweise schaumseitig/polsterseitig des Sitzteiles 12, 12A beziehungsweise 14, 14A geschlossen ist, sodass gemäß dem Pfeil 1.1 → 1.2 in Figur 2 im Betrieb des Radiallüfters 10 eine drückende Strömung im zweiten Kanal II erzeugt wird, mittels der die Polster des Sitzteiles 12 und/oder der Rückenlehne in einem Druckbetrieb betrieben werden können.

Im Druckkanal II ist, wie erläutert, ebenfalls die 3/2-Wege-Umschalt-Armatur V2 angeordnet, wobei die 3/2-Wege-Umschalt-Armatur V2 eine erste Schaltstellung 2.1ZU einnimmt, sodass der erste Weg 2.1 des Druckkanals II jetzt umgebungsseitig geschlossen ist.

Der zweite Weg 2.2 druckseitig des Radiallüfters 10 und der dritte Weg 2.3 sitzseitig beziehungsweise schaumseitig/polsterseitig des Sitzteiles 12, 12A beziehungsweise 14, 14A ist offen, da die 3/2-Wege-Umschalt-Armatur V2 umgebungsseitig in Schließstellung ist, wie gemäß dem Pfeil 2.2 → 2.3 (Offenstellung im Druckbetrieb Kanal II) verdeutlicht ist.

In vorteilhafter Weise ist eine Steuerung mit einem Steuergerät (nicht dargestellt) und einer der Belüftungseinheit vorgesehenen Bedieneinheit vorgesehen, mittels der ein Nutzer nach seinen subjektiven Präferenzen den Saug- oder Druckbetrieb der Komponenten 12, 14 für alle Komponenten gleichzeitig und/oder individuell für die jeweiligen Komponenten 12, 14 auswählen kann. Dazu ist in dem Steuergerät ein entsprechendes Programm abgelegt.

Ein Sitz 100 mit der Belüftungseinheit ist derart eingerichtet, das Verfahren zum Steuern der Belüftungseinheit auszuführen. Zu diesem Zweck umfasst der Sitz eine Steuereinrichtung, in der ein computerlesbarer Programmalgorithmus zur Ausführung des Verfahrens gespeichert ist.

### Bezugszeichenliste

- 100: Sitz
- 10: Lüfter
- 12: Sitzteil
- 12A: Schaum
- 14: Rückenlehne
- 14A: Schaum
- I: erster Kanal, Saugkanal
- II: zweiter Kanal, Druckkanal
- V1: erste Umschaltarmatur
- 1.1: erster Weg
- 1.2: zweiter Weg
- 1.3: dritter Weg
- 1.1ZU: erste Schaltstellung ZU
- 1.1AUF: zweite Schaltstellung AUF
- V2: zweite Umschaltarmatur
- 2.1: erster Weg
- 2.2: zweiter Weg
- 2.3: dritter Weg
- 2.1ZU: erste Schaltstellung ZU
- 2.1AUF: zweite Schaltstellung AUF

## Patentansprüche

1. Sitz (100) umfassend mindestens eine Komponente (12, 14), der mittels eines Radiallüfters (10) einer Belüftungseinheit an einer dem Fahrzeuginsassen zugewandten Fläche der mindestens einen Komponente (12, 14) Luft in einem Saugbetrieb oder in einem Druckbetrieb ab- oder zugeführt wird, wobei die Belüftungseinheit neben dem Lüfter (10) ansaugseitig des Radiallüfters (10) einen Saugkanal (I) und druckseitig des Radiallüfters (10) einen Druckkanal (II) umfasst, wobei jedem Kanal (I, II) eine 3/2-Wege-Umschaltarmatur (V1, V2) zugeordnet ist, die derart geschaltet sind, dass unter Beibehaltung der Drehrichtung des Radiallüfters (10) im Saugbetrieb im Saugkanal (I) eine saugende und im Druckbetrieb im Druckkanal (II) eine drückende strömungstechnische Verbindung zu der mindestens einen Komponente (12, 14) gewährleistet ist, wobei stets eine der 3/2-Wege-Umschaltarmaturen (V1, V2) umgebungsseitig eine Offenstellung (1.1AUF, 2.1 AUF) einnimmt, in der sie gleichzeitig den ihr zugeordneten Kanal (I, II) in Richtung der mindestens einen Komponente (12, 14) schließt,
**dadurch gekennzeichnet, dass**
die 3/2-Wege-Umschaltarmaturen (V1, V2) und der Radiallüfter (10) ein kompaktes Modul bilden, indem die 3/2-Wege-Umschaltarmaturen (V1, V2) und der Radiallüfter (10) in die Kanäle (I, II) integriert angeordnet sind, wobei für beide 3/2-Wege-Umschaltarmaturen (V1, V2) ein einziger Stellantrieb vorgesehen ist, der das wechselseitige Öffnen (1.1AUF, 2.1AUF) und Schließen (1.1ZU, 2.1ZU) der 3/2-Wege-Umschalt-Armaturen (V1, V2) bewirkt, wobei der einzige Stellantrieb eine einzige antriebsseitige Achse antreibt, auf der die als Lüftungsklappen ausgebildeten 3/2-Wege-Umschalt-Armaturen (V1, V2) zueinander versetzt fest angeordnet sind, sodass eine Drehbewegung der einzigen antriebsseitigen Achse in die eine oder andere Drehrichtung mittels des einzigen Stellantriebs beide Lüftungsklappen in die gewünschte Stellung bewegt, wobei eine Umschaltung vom Saugbetrieb in den Druckbetrieb und umgekehrt durch wechselseitiges Öffnen (1.1AUF, 2.1AUF) und Schließen (1.1ZU, 2.1ZU) der Lüftungsklappen erfolgt.

2. Sitz (100) nach Anspruch 1, **dadurch gekennzeichnet, dass** im Saugkanal (I) eine erste 3/2-Wege-Umschalt-Armatur (V1) angeordnet ist, wobei die erste 3/2-Wege-UmschaltArmatur (V1) im Saugbetrieb eine erste Schaltstellung (1.1ZU) einnimmt, bei der ein erster Weg (1.1) des Saugkanals (I) umgebungsseitig geschlossen ist, und ein zweiter Weg (1.2) saugseitig des Radiallüfters (10) und ein dritter Weg (1.3) komponentenseitig offen sind, wobei
• im Druckkanal (II) eine zweite 3/2-Wege-Umschalt-Armatur (V2) angeordnet ist, die im Saugbetrieb gleichzeitig eine erste Schaltstellung (2.1AUF) einnimmt, bei der ein erster Weg (2.1) des Druckkanals (I) umgebungsseitig offen ist, und ein zweiter Weg (2.2) saugseitig des Radiallüfters (10) offen und ein dritter Weg (2.3) komponentenseitig geschlossen sind.

3. Sitz (100) nach Anspruch 1, **dadurch gekennzeichnet, dass**
• im Druckanal (II) die zweite 3/2-Wege-Umschalt-Armatur (V2) angeordnet ist, wobei die zweite 3/2-Wege-Umschalt-Armatur (V2) im Druckbetrieb eine erste Schaltstellung (2.1ZU) einnimmt, bei der ein erster Weg (2.1) des Druckkanals (II) umgebungsseitig geschlossen ist und ein zweiter Weg (2.2) druckseitig des Radiallüfters (10) und ein dritter Weg (2.3) komponentenseitig offen sind, wobei
• im Saugkanal (I) die erste 3/2-Wege-Umschalt-Armatur (V1) angeordnet ist, die im Druckbetrieb gleichzeitig eine erste Schaltstellung (1.1AUF) einnimmt, bei der ein erster Weg (1.1) des Saugkanals (I) umgebungsseitig offen ist, und ein zweiter Weg (1.2) saugseitig des Radiallüfters (10) offen und ein dritter Weg (1.3) komponentenseitig geschlossen sind.

4. Sitz (100) nach Anspruch 1, **dadurch gekennzeichnet, dass** die 3/2-Wege-Umschaltarmaturen (V1, V2) und der Radiallüfter (10) sowie die Kanäle (I, II)
• außerhalb der Struktur der mindestens einen Komponente (12, 14) oder
• in der Struktur der mindestens einen Komponente (12, 14) oder
• im Schaum eines Polsters der mindestens einen Komponente (12, 14) angeordnet sind, wobei die Kanäle (I, II) mit mindestens einem Luftführungskanal in Verbindung stehen, der an der zugewandten Fläche der mindestens einen Komponente (12, 14) endet.

5. Sitz (100) nach Anspruch 1 oder 4, **dadurch gekennzeichnet, dass** der Saugkanal (I) und der Druckkanal (II) mit dem mindestens einen Luftführungskanal in Verbindung stehen, über den der mindestens einen Komponente (12, 14) wechselseitig Luft abgesaugt oder zugeführt wird.

6. Sitz (100) nach Anspruch 1 oder 4, **dadurch gekennzeichnet, dass** der Saugkanal (I) und der Druckkanal (II) jeweils mit mindestens einem Luftführungskanal in Verbindung stehen, über die der mindestens einen Komponente (12, 14) unabhängig voneinander Luft abgesaugt oder zugeführt wird.

7. Kraftfahrzeug mit einem Sitz (100) nach mindestens einem der Ansprüche 1 bis 6.

8. Verfahren zum Steuern einer Belüftungseinheit für ein Polster (16) eines Sitzes (100) nach Anspruch 1, mittels der einer dem Fahrzeuginsassen zugewandten Fläche der mindestens einen Komponente (12, 14) Luft in einem Saugbetrieb oder in einem Druckbetrieb ab- oder zugeführt wird, wobei der Radiallüfters (10) ansaugseitig einem Saugkanal (I) und druckseitig einem Druckkanal (II) zugeordnet ist, wobei jedem Kanal (I, II) eine 3/2-Wege-Umschalt-Armatur (V1, V2) zugeordnet ist, die derart geschaltet werden, dass unter Beibehaltung der Drehrichtung des Radiallüfters (10) im Saugbetrieb im Saugkanal (I) eine saugende und im Druckbetrieb eine drückende strömungstechnische Verbindung zu der mindestens einen Komponente (12, 14) ausgebildet wird, wobei eine Umschaltung vom Saugbetrieb in den Druckbetrieb und umgekehrt durch wechselseitiges Öffnen (1.1AUF, 2.1AUF) und Schließen (1.1ZU, 2.1ZU) der 3/2-Wege-Umschalt-Armaturen (V1, V2) vorgenommen wird, wobei für beide 3/2-Wege-Umschaltarmaturen (V1, V2) ein einziger Stellantrieb vorgesehen ist, der das wechselseitige Öffnen (1.1AUF, 2.1AUF) und Schließen (1.1ZU, 2.1ZU) der 3/2-Wege-Umschalt-Armaturen (V1, V2) bewirkt, wobei der einzige Stellantrieb eine einzige antriebsseitige Achse antreibt, auf der die als Lüftungsklappen ausgebildeten 3/2-Wege-Umschalt-Armaturen (V1, V2) zueinander versetzt fest angeordnet sind, sodass beide Lüftungsklappen bei einer Drehbewegung der einzigen antriebsseitigen Achse in die eine oder andere Drehrichtung mittels des einzigen Stellantriebs in die gewünschte Stellung bewegt werden.

## Claims

1. Seat (100) comprising at least one component (12, 14) from which air is removed in a suction mode or to which air is supplied in a delivery mode by means of a radial fan (10) of a ventilation unit on a surface of the at least one component (12, 14) facing the vehicle occupant, the ventilation unit comprising, in addition to the fan (10), a suction channel (I) on the intake side of the radial fan (10) and a delivery channel (II) on the delivery side of the radial fan (10), each channel (I, II) being assigned a 3/2-way switching valve (V1, V2), which switching valves are switched in such a way that, while maintaining the direction of rotation of the radial fan (10), a suction flow connection to the at least one component (12, 14) is ensured in the suction channel (I) in the suction mode and a delivery flow connection to said at least one component is ensured in the delivery channel (II) in the delivery mode, one of the 3/2-way switching valves (V1, V2) always assuming an open position (1.1AUF, 2.1AUF) toward the surroundings, in which it simultaneously closes the channel (I, II) assigned to it in the direction of the at least one component (12, 14),
**characterized in that**
the 3/2-way switching valves (V1, V2) and the radial fan (10) form a compact module **in that** the 3/2-way switching valves (V1, V2) and the radial fan (10) are integrated in the channels (I, II), a single actuator being provided for the two 3/2-way switching valves (V1, V2), which actuator causes the alternate opening (1.1AUF, 2.1AUF) and closing (1.1ZU, 2.1ZU) of the 3/2-way switching valves (V1, V2), the single actuator driving a single drive-side shaft on which the 3/2-way switching valves (V1, V2) designed as ventilation flaps are fixedly arranged so as to be offset from one another, so that a rotational movement of the single drive-side shaft in one or the other direction of rotation moves the two ventilation flaps to the desired position by means of the single actuator, switching from the suction mode to the delivery mode and vice versa taking place by alternately opening (1.1AUF, 2.1AUF) and closing (1.1ZU, 2.1ZU) the ventilation flaps.

2. Seat (100) according to claim 1, **characterized in that** a first 3/2-way switching valve (V1) is arranged in the suction channel (I), the first 3/2-way switching valve (V1) assuming a first switching position (1.1ZU) in the suction mode, in which position a first path (1.1) of the suction channel (I) is closed toward the surroundings, and a second path (1.2) is open on the suction side of the radial fan (10) and a third path (1.3) is open on the component side,
• a second 3/2-way switching valve (V2) being arranged in the delivery channel (II), which simultaneously assumes a first switching position (2.1AUF) in the suction mode, in which position a first path (2.1) of the delivery channel (I) is open toward the surroundings, and a second path (2.2) is open on the suction side of the radial fan (10) and a third path (2.3) is closed on the component side.

3. Seat (100) according to claim 1, **characterized in that**
• the second 3/2-way switching valve (V2) is arranged in the delivery channel (II), the second 3/2-way switching valve (V2) assuming a first switching position (2.1ZU) in the delivery mode, in which position a first path (2.1) of the delivery channel (II) is closed toward the surroundings and a second path (2.2) is open on the delivery side of the radial fan (10) and a third path (2.3) is open on the component side,
• the first 3/2-way switching valve (V1) being arranged in the suction channel (I), which simultaneously assumes a first switching position (1.1AUF) in the delivery mode, in which position a first path (1.1) of the suction channel (I) is open toward the surroundings, and a second path (1.2) is open on the suction side of the radial fan (10) and a third path (1.3) is closed on the component side.

4. Seat (100) according to claim 1, **characterized in that** the 3/2-way switching valves (V1, V2) and the radial fan (10) as well as the channels (I, II) are arranged
• outside the structure of the at least one component (12, 14) or
• in the structure of the at least one component (12, 14) or
• in the foam of a cushion of the at least one component (12, 14), the channels (I, II) being connected to at least one air guide channel which ends on the facing surface of the at least one component (12, 14).

5. Seat (100) according to claim 1 or 4, **characterized in that** the suction channel (I) and the delivery channel (II) are connected to the at least one air guide channel, via which air is alternately suctioned from or supplied to the at least one component (12, 14).

6. Seat (100) according to claim 1 or 4, **characterized in that** the suction channel (I) and the delivery channel (II) are each connected to at least one air guide channel, via which air is suctioned from or supplied to the at least one component (12, 14) independently of one another.

7. Motor vehicle comprising a seat (100) according to at least one of claims 1 to 6.

8. Method for controlling a ventilation unit for a cushion (16) of a seat (100) according to claim 1, by means of which air is removed from or supplied to a surface of the at least one component (12, 14) facing the vehicle occupant in a suction mode or in a delivery mode, respectively, wherein the radial fan (10) is assigned to a suction channel (I) on the intake side and to a delivery channel (II) on the delivery side, wherein each channel (I, II) is assigned a 3/2-way switching valve (V1, V2), which switching valves are switched in such a way that, while maintaining the direction of rotation of the radial fan (10), a suction flow connection to the at least one component (12, 14) is formed in the suction channel (I) in the suction mode and a delivery flow connection to said at least one component is formed in the delivery mode, wherein switching from the suction mode to the delivery mode and vice versa takes place by alternately opening (1.1AUF, 2.1AUF) and closing (1.1ZU, 2.1ZU) the 3/2-way switching valves (V1, V2), wherein a single actuator is provided for the two 3/2-way switching valves (V1, V2), which actuator causes the alternate opening (1.1AUF, 2.1AUF) and closing (1.1ZU, 2.1ZU) of the 3/2-way switching valves (V1, V2), wherein the single actuator drives a single drive-side shaft on which the 3/2-way switching valves (V1, V2) designed as ventilation flaps are fixedly arranged so as to be offset from one another, so that the two ventilation flaps are moved to the desired position by means of the single actuator when the single drive-side shaft rotates in one or the other direction of rotation.

## Revendications

1. Siège (100) comprenant au moins un composant (12, 14) auquel de l'air est amené ou duquel de l'air est évacué dans un mode de refoulement ou dans un mode d'aspiration au moyen d'une soufflante radiale (10) d'une unité de ventilation sur une surface de l'au moins un composant (12, 14) tournée vers l'occupant du véhicule, dans lequel l'unité de ventilation comprend, outre la soufflante (10), un canal d'aspiration (I) côté aspiration de la soufflante radiale (10) et un canal de refoulement (II) côté refoulement de la soufflante radiale (10), dans lequel une vanne de commutation 3/2 voies (V1, V2) est associée à chaque canal (I, II), lesquelles sont commutées de telle sorte que, tout en conservant le sens de rotation de la soufflante radiale (10), une liaison fluidique d'aspiration avec l'au moins un composant (12, 14) est assurée dans le canal d'aspiration (I) dans le mode d'aspiration et une liaison fluidique de refoulement avec ledit au moins un composant est assurée dans le canal de refoulement (II) dans le mode de refoulement, dans lequel l'une des vannes de commutation 3/2 voies (V1, V2) occupe toujours une position ouverte (1.1AUF, 2.1AUF) côté environnement, dans laquelle elle ferme simultanément le canal (I, II) qui lui est associé en direction de l'au moins un composant (12, 14),
**caractérisé en ce que**
les vannes de commutation 3/2 voies (V1, V2) et la soufflante radiale (10) forment un module compact par le fait que les vannes de commutation 3/2 voies (V1, V2) et la soufflante radiale (10) sont disposées de manière à être intégrées dans les canaux (I, II), dans lequel un unique servomoteur est prévu pour les deux vannes de commutation 3/2 voies (V1, V2), lequel commande l'ouverture (1.1AUF, 2.1AUF) et la fermeture (1.1ZU, 2.1ZU) alternées des vannes de commutation 3/2 voies (V1, V2), dans lequel l'unique servomoteur entraîne un unique axe côté entraînement sur lequel les vannes de commutation 3/2 voies (V1, V2) réalisées sous forme de clapets de ventilation sont disposées de manière à être fixes et décalées l'une par rapport à l'autre, de sorte qu'un mouvement de rotation de l'axe unique côté entraînement dans l'un ou l'autre sens de rotation déplace les deux clapets de ventilation dans la position souhaitée au moyen de l'unique servomoteur, dans lequel une commutation du mode d'aspiration au mode de refoulement et inversement est effectuée par ouverture (1.1AUF, 2.1AUF) et fermeture (1.1ZU, 2.1ZU) alternées des clapets de ventilation.

2. Siège (100) selon la revendication 1, **caractérisé en ce qu'**une première vanne de commutation 3/2 voies (V1) est disposée dans le canal d'aspiration (I), dans lequel la première vanne de commutation 3/2 voies (V1) occupe, dans le mode d'aspiration, une première position de commutation (1.1ZU), dans laquelle une première voie (1.1) du canal d'aspiration (I) est fermée côté environnement, et une deuxième voie (1.2) côté aspiration de la soufflante radiale (10) et une troisième voie (1.3) côté composant sont ouvertes, dans lequel
• dans le canal de refoulement (II) est disposée une seconde vanne de commutation 3/2 voies (V2) qui, dans le mode d'aspiration, occupe simultanément une première position de commutation (2.1AUF) dans laquelle une première voie (2.1) du canal de refoulement (I) est ouverte côté environnement, et une deuxième voie (2.2) est ouverte côté aspiration de la soufflante radiale (10) et une troisième voie (2.3) est fermée côté composant.

3. Siège (100) selon la revendication 1, **caractérisé en ce que**
• la seconde vanne de commutation 3/2 voies (V2) est disposée dans le canal de refoulement (II), dans lequel la seconde vanne de commutation 3/2 voies (V2) occupe, dans le mode de refoulement, une première position de commutation (2.1ZU) dans laquelle une première voie (2.1) du canal de refoulement (II) est fermée côté environnement et une deuxième voie (2.2) côté refoulement de la soufflante radiale (10) et une troisième voie (2.3) côté composant sont ouvertes, dans lequel
• dans le canal d'aspiration (I) est disposée la première vanne de commutation 3/2 voies (V1) qui, dans le mode de refoulement, occupe simultanément une première position de commutation (1.1AUF) dans laquelle une première voie (1.1) du canal d'aspiration (I) est ouverte côté environnement, et une deuxième voie (1.2) est ouverte côté aspiration de la soufflante radiale (10) et une troisième voie (1.3) est fermée côté composant.

4. Siège (100) selon la revendication 1, **caractérisé en ce que** les vannes de commutation 3/2 voies (V1, V2) et la soufflante radiale (10) ainsi que les canaux (I, II) sont disposés
• à l'extérieur de la structure de l'au moins un composant (12, 14) ou
• dans la structure de l'au moins un composant (12, 14) ou
• dans la mousse d'un coussin de l'au moins un composant (12, 14), dans lequel les canaux (I, II) sont en liaison avec au moins un canal de guidage d'air qui se termine sur la surface en regard de l'au moins un composant (12, 14).

5. Siège (100) selon la revendication 1 ou 4, **caractérisé en ce que** le canal d'aspiration (I) et le canal de refoulement (II) sont en liaison avec l'au moins un canal de guidage d'air, par l'intermédiaire duquel de l'air est alternativement aspiré de l'au moins un composant (12, 14) ou amené à celui-ci.

6. Siège (100) selon la revendication 1 ou 4, **caractérisé en ce que** le canal d'aspiration (I) et le canal de refoulement (II) sont respectivement en liaison avec au moins un canal de guidage d'air, par l'intermédiaire duquel de l'air est aspiré de l'au moins un composant (12, 14) ou amené à celui-ci indépendamment l'un de l'autre.

7. Véhicule automobile comportant un siège (100) selon au moins l'une des revendications 1 à 6.

8. Procédé pour la commande d'une unité de ventilation pour un coussin (16) d'un siège (100) selon la revendication 1, au moyen de laquelle de l'air est évacué d'une surface, tournée vers l'occupant du véhicule, de l'au moins un composant (12, 14) dans un mode d'aspiration, ou est amené à ladite surface dans un mode de refoulement, dans lequel la soufflante radiale (10) est associée côté aspiration à un canal d'aspiration (I) et côté refoulement à un canal de refoulement (II), dans lequel une vanne de commutation 3/2 voies (V1, V2) est associée à chaque canal (I, II), lesquelles sont commutées de telle sorte que, tout en conservant le sens de rotation de la soufflante radiale (10), une liaison fluidique d'aspiration avec l'au moins un composant (12, 14) est réalisée dans le canal d'aspiration (I) dans le mode d'aspiration et une liaison fluidique de refoulement avec ledit au moins un composant est réalisée dans le mode de refoulement, dans lequel une commutation du mode d'aspiration au mode de refoulement et inversement est effectuée par ouverture (1.1AUF, 2.1AUF) et fermeture (1.1ZU, 2.1ZU) alternées des vannes de commutation 3/2 voies (V1, V2), dans lequel un unique servomoteur est prévu pour les deux vannes de commutation 3/2 voies (V1, V2), lequel commande l'ouverture (1.1AUF, 2.1AUF) et la fermeture (1.1ZU, 2.1ZU) alternées des vannes de commutation 3/2 voies (V1, V2), dans lequel l'unique servomoteur entraîne un axe unique côté entraînement sur lequel les vannes de commutation 3/2 voies (V1, V2) réalisées sous forme de clapets de ventilation sont disposées de manière à être fixes et décalées l'une par rapport à l'autre, de sorte que les deux clapets de ventilation sont déplacés dans la position souhaitée au moyen de l'unique servomoteur lors d'un mouvement de rotation de l'axe unique côté entraînement dans l'un ou l'autre sens de rotation.
